Europäisches Patentamt

European Patent Office

Office européen des brevets

(11) Veröffentlichungsnummer: **0 261 741**

**A2**

(12) **EUROPÄISCHE PATENTANMELDUNG**

(21) Anmeldenummer: 87201823.9

(51) Int. Cl.⁴: **C01B 31/04**

(22) Anmeldetag: 22.09.87

(30) Priorität: 26.09.86 DE 3632834

(43) Veröffentlichungstag der Anmeldung:
30.03.88 Patentblatt 88/13

(84) Benannte Vertragsstaaten:
AT BE CH DE FR GB IT LI NL SE

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **BE CH FR GB IT LI NL SE AT**

(72) Erfinder: **Lersmacher, Bernhard, Dr.**
**Schlossweiherstrasse 31**
**D-5100 Aachen(DE)**
Erfinder: **Knippenberg, Wilhelmus Franciscus**
**Antoon Koolenlaan 11**
**NL Aalst-Eindhoven(NL)**

(74) Vertreter: **Piegler, Harald, Dipl.-Chem. et al**
**Philips Patentverwaltung GmbH**
**Wendenstrasse 35 Postfach 10 51 49**
**D-2000 Hamburg 1(DE)**

(54) **Verfahren zur Herstellung von pyrolytischem Graphit.**

(57) Ein mit Wachstumszentren durchsetzter pyrolytischer Graphit wird dadurch erzeugt, daß beim CVD-Verfahren die Abscheidung mit Abscheidungsraten von 1 bis 10μm/min durchgeführt wird, daß die Gasphase aus mindestens einem gesättigten Kohlenwasserstoff mit 1 bis 4 Kohlenstoffatomen besteht, dem 1 bis 10 Vol.% mindestens eines ungesättigten Kohlenwasserstoffs zugesetzt worden sind, und daß im gesamten Verfahrensablauf der kritsche Grenzdruck, bei dem eine Rußbildung einsetzt, nicht überschritten wird. Der so erzeugte pyrolytische Graphit hat eine mechanisch relativ stabile Struktur und eignet sich für frei-oder selbsttragende Objekte wie Gitter für Elektronenröhren und AAS-Cuvetten.

Fig.1

## Verfahren zur Herstellung von pyrolytischem Graphit

Die Erfindung betrifft ein Verfahren zur Herstellung von pyrolytischem Graphit durch reaktive Abscheidung aus einer Gasphase (CVD-Verfahren), die gesättigte und ungesättigte Kohlenwasserstoffe enthält.

Ein derartges Verfahren ist aus US-A-3 442 617 bekannt. Ziel des dort beschriebenen Verfahrens ist die Herstellung von sehr dicken Formkörpern mit komplizierter Geometrie bei sehr hoher Abscheidungsgeschwindigkeit. Der so hergestellte pyrolytische Graphit soll ein gut orientiertes und gleichmäßiges Kristallwachstum zeigen und eine vernachlässigbare oder überhaupt keine Bildung von einzelnen abnorm großen paraboloidförmigen Wachstumskegeln aufweisen. Derartige abnorme Wachstumskegel, die durch Rußbildung in der Gasphase entstehen, wobei die Rußteilchen als Wachstumszentren wirken, sind in Philips technische Rundschau 28 (1967) 146, 36 (1976/77) 113 und 37 (1977/78) 208 sowie in General Electric Research Laboratory Report No. 62-RL-2991M (Schenectady, N.Y., USA, 1962) Seiten 5, 8 und 31 bis 35, abgebildet und näher beschrieben.

Die zuvorgenannten Ziele werden gemäß US-A-3 442 617 durch die Verwendung von Acetylen als Gasphase bei bestimmten Drücken und mit bestimmten Gasflüssen erreicht. Dem Acetylen werden gegebenenfalls Verdünnungsmittel, z.B. Stickstoff, Argon, Helium, Wasserstoff oder Kohlenwasserstoffe (KW) wie Methan, Propan, Butan oder Benzol, und/oder Aktivatoren, z.B. Sauerstoff, Sauerstoffverbindungen, Halogene oder Halogenverbindungen, zugesetzt.

Bei Verwendung von unverdünntem Acetylen werden nach US-A-3 442 617 bei Temperaturen zwischen 1900 und 2300°C Drücke von 133 bis 800 Pa und Gasflüsse von 5 bis 7 1/min angewendet; daraus resultieren Abscheidungsgeschwindigkeiten von 0,6 bis 1,5 mm/h. Wenn Verdünnungsmittel verwendet werden, soll der Partialdruck des Acetylens zwischen 133 und 800 Pa liegen. In einem Beispiel sind als Acetylen-Gasfluß 4,0 1/min und als Methan-Gasfluß 2,0 1/min angegeben. Kohlenwasserstoffe als Verdünnungsmittel sollen gleichmäßigere Ablagerungen und eine weitere Erhöhung der Abscheidungsgeschwindigkeit bewirken.

In der US-A-3 442 617 wird allerdings erwähnt, daß die Gefahr einer Delamination der erhaltenen Formkörper bei Zimmertemperatur besteht.

Aus Philips technische Rundschau 37 (1977/78) 205-213 ist es bekannt, daß für die Herstellung von pyrolytischem Graphit zwei CVD-Verfahren zur Anwendung kommen, nämlich die Kaltwandmethode und die Heißwandmethode. In beiden Fällen wird eine mit einer Wärmequelle versehene CVD-Vorrichtung verwendet, in deren Reaktorkammer ein Substrat angebracht ist. Der Unterschied zwischen den beiden Methoden besteht darin, an welcher Stelle sich die Wärmequelle befindet. Im Falle der Kaltwandmethode wird das Substrat selbst erhitzt, wodurch seine Temperatur höher wird als die seiner Umgebung einschließlich der Kammerwand. Bei der Heißwandmethode sind Substrat und Reaktorkammer von einem Heizelement umgeben, welches naturgemäß die höchste Temperatur in der CVD-Vorrichtung besitzt.

Der mit der Kaltwandmethode hergestellte pyrolytische Graphit weist eine Wachstumskegel- oder Bündelstruktur auf, vgl. Philips technische Rundschau 37 (1977/78) 208 mit Philips technische Rundschau 36 (1976/77) 113. Diese Struktur hat den Nachteil, daß eine Schicht nur dann nicht splittert oder abblättert, wenn sie entweder sehr dünn ist, z.B. kleiner als 10 μm, und außerdem fest am Substrat haftet oder wenn die Schicht dicker ist als etwa 0,5 bis 1,0 mm. Dies bedeutet, daß die Kaltwandmethode nicht geeignet ist, freitragende Körper mit Wandstärken zwischen den genannten Werten herzustellen. Bei der Herstellung von selbsttragenden Objekten muß sch nämlich die abgeschiedene Schicht mittels kontrollierter Abkühlung leicht als Ganzes vom Substrat trennen lassen.

Dieses Problem tritt bei der Heißwandmethode viel weniger stark in Erscheinung. Hierbei entstehen Schichten, die in ihrem gesamten Volumen mit Wachstumszentren durchsetzt sind. Eine derartige Schicht ist in Philips technische Rundschau 37 (1977/78) auf Seite 209 abgebildet.

Bei den Untersuchungen, die zur Erfindung geführt haben, hat sich herausgestellt, daß die Bildung von homogen vertelten Wachstumszentren und damit die Erzeugung einer bestimmten Strukturvariante gewissen Begrenzungen bzw. Einschränkungen unterliegt, also nicht nach Belieben durch Variation der Konzentration bzw. des Druckes gesteuert werden kann. Dies sei an einem Beispiel erläutert. Bei Einspeisung des zu pyrolysierenden KW-Gases in die 2000°C heiße Reaktorkammer ener für die Heißwandmethode ausgerüsteten CVD-Vorrichtung zersetzt sich das Gas und elementarer Kohlenstoff wird sowohl auf den in der Reaktorkammer untergebrachten Substraten (z.B. Graphitstäben) als auch auf den Kammerwänden abgeschieden. Dadurch tritt bei stationärer Gaszufuhr mit zunehmendem Abstand von den Gaseinlaßdüsen - also in diesem Falle zur Kammermitte hin - eine Verarmung des Gases an Kohlenstoff ein. Die Folge davon ist eine Verringerung der Abscheidungsrate und eine Variation der Strukturmerkmale längs der Reaktorachse. So wurde beobachtet, daß beispielsweise in der Nähe der Gaseinlässe die mit Wachstumszentren durchsetzte Struktur vorherrschen kann, während zur Kammermitte hin die Merkmale des pyrolytischen Graphits mit Bündelstruktur zunehmen.

Um in dieser Hinsicht eine gleichförmigere Struktur herbeizuführen, bieten sich zwei Möglichkeiten an. Es scheint naheliegend, der Verarmung an Kohlenstoff durch Druckerhöhung zu begegnen. Dabei hat sich jedoch gezeigt, daß - schon bei geringfügiger Überschreitung eines für das jeweilige CVD-Verfahren und die entsprechende CVD-Vorrichtung gültigen Grenzdruckes $p_{krit}$ eine spontane Bildung sehr großer Rußteilchen einsetzt. Naturgemäß ist diese Rußbildung in den Gebieten am stärksten, in denen ohnehin die größte Übersättigung besteht, also in der Nähe des Gaseinlässe. Der Nachteil des Einbaus von Ruß wirkt sich einmal in einer stark verminderten Qualität des angestrebten Produktes aus. Zum anderen erfordert ein Rußanfall in der CVD-Vorrichtung aufwendige Reinigungsarbeiten nach jedem Abscheidungszyklus und sollte auch aus diesem Grunde vermieden werden.

Eine zweite Möglichkeit, eine gleichförmigere Bildung von Wachstumszentren in der gesamten Reaktorkammer herbeizuführen, besteht in der Erhöhung der Zahl der Gaseinlaßdüsen und deren richtiger Positionierung. Diese Maßnahme ist jedoch mit einem sehr hohen technischen Aufwand verbunden, da das zu pyrolysierende Gas kalt in die auf mindestens 2000°C befindliche heiße Reaktorkammer hineingeführt werden muß. Dies erfordert die Konstruktion und den Einbau sehr aufwendiger und damit kostspieliger Einlaßdüsen.

Der Erfindung liegt die Aufgabe zugrunde, die zuvor angesprochene Delamination durch eine gleichförmige und hinreichende Bildung von Wachstumszentren in der gesamten Reaktorkammer zu verhindern und eine möglichst homogene mit eingebauten Wachstumszentren durchsetzte Struktur zu erreichen.

Diese Aufgabe wird erfindungsgemäß dadurch gelöst, daß bei einem Verfahren der eingangs genannten Art die Abscheidung mit Abscheidungsraten von 1 bis 10μm/min durchgeführt wird, daß die Gasphase aus mindestens einem gesättigten Kohlenwasserstoff mit 1 bis 4 Kohlenstoffatomen besteht, dem 1 bis 10 Vol.% mindestens eines ungesättigten Kohlenwasserstoffs zugesetzt worden sind, und daß im gesamten Verfahrensablauf der kritische Grenzdruck, bei dem eine Rußbildung einsetzt, nicht überschritten wird.

Die Erfindung geht davon aus, daß es üblich ist, für die Herstellung von pyrolytischem Graphit niedrigmolekulare Kohlenwasserstoffe, insbesondere die niedrigen Homologen der Methanreihe (Alkane), als Pyrolysegas zu verwenden. Vorzugsweise wird mit Methan, Äthan oder Propan gearbeitet, da die Verwendung höherer Homologe und ungesättigter Kohlenwasserstoffe bereits bei relativ niedrigen Drücken zu Rußbildung führt. Hinzu kommt, daß noch niedrigere Drücke (ungefähr 10 Pa) bzw. Kohlenstoffkonzentrationen in der Gasphase zu technisch nicht mehr vertretbaren geringen Abscheidungsraten bzw. sehr langen Beschichtungsdauern führen würden.

Überraschenderweise wurde nun gefunden, daß die angestrebte Bildung von homogen verteilten Wachstumszentren mit günstiger Auswirkung auf das Gefüge des abgeschiedenen Produktes in der gesamten Reaktorkammer mit großer Gleichförmigkeit erreicht werden kann, wenn dem gebräuchlichen Pyrolysegas mindestens ein weiterer ungesättigter Kohlenwasserstoff wie insbesondere Äthylen oder Acetylen zugesetzt wird und dabei die übrigen kennzeichnenden Verfahrensbedingungen eingehalten werden. Weitere Beispiele für ungesättigte KW sind aromatische KW wie Benzol, Toluol oder Xylol. Der zuvor erwähnte Grenzdruck $p_{krit}$, bei dem die Rußbildung einsetzt, ist für unterschiedliche CVD-Vorrichtungen verschieden und darf nicht überschritten werden.

Es hat sich in einer Reihe von Versuchen gezeigt, daß durch das Hinzufügen einer ungesättigten Komponente, d.h. eines thermodynamisch relativ instabilen Gases, unter Beibehaltung der für das gebräuchliche Pyrolysegas gültigen Abscheidungsparameter die Kinetik der Bildung von Wachstumszentren im Sinne einer homogeneren Verteilung in der gesamten Reaktorkammer beeinflußt wird.

Es wurde weiter gefunden, daß durch Regelung der Zusammensetzung des Pyrolysegases die Struktur in Richtung pyrolytischer Graphit mit Bündelstruktur oder mit Wachstumszentren durchsetzter pyrolytischer Graphit in der gesamten Reaktorkammer verschoben werden kann. Diese Strukturvarianten können auf die erfindungsgemäße Weise sowohl durchgehend für die gesamte Dicke der abgeschiedenen Schicht als auch alternierend in Form zweier oder mehrerer unterschiedlich strukturierter Schichtfolgen realisiert werden.

Alternierende Schichtfolgen werden vorzugsweise dadurch erzeugt, daß der Anteil an ungesättigtem Kohlenwasserstoff in der Gasphase während der Abscheidung einmal oder mehrmals für 0,5 bis 50 min auf 10 bis 50 Vol.% erhöht wird.

Zum Erzielen einer bestimmten Struktur ist eine möglichst aus zwei oder mehr Komponenten bestehenden Pyrolysegases, zweckmäßig. Dies wird z.B. dadurch erreicht, daß jede einzelne Komponente über ein regelbares Einwegventil in eine Mischkammer gegeben wird, aus der das Mischgas in die Reaktorkammer eingespeist wird.

Die Erfindung wird nun anhand einer Zeichnung und einiger Ausführungsbeispiele näher erläutert. In der Zeichnung zeigen

Fig. 1 ein Schliffbild von ausgeprägt mit Wachstumszentren durchsetztem pyrolytischem Graphit in 150-facher Vergrößerung,

Fig. 2 ein Schliffbild von pyrolytischem Graphit mit Bündelstruktur in 75-facher Vergrößerung,

Fig. 3 ein Beispiel für die Delamination bei pyrolytischem Graphit mit Bündelstruktur in einem Schliffbild mit 150-facher Vergrößerung und

Fig. 4 ein Schliffbild (150-fach vergrößert) einer Mischstruktur mit einem Wechsel von Bündelstruktur zu mit Wachstumszentren durchsetzter Struktur durch Erhöhung der Bildung von Wachstumszentren nach etwa 60 % der Reaktionsdauer.

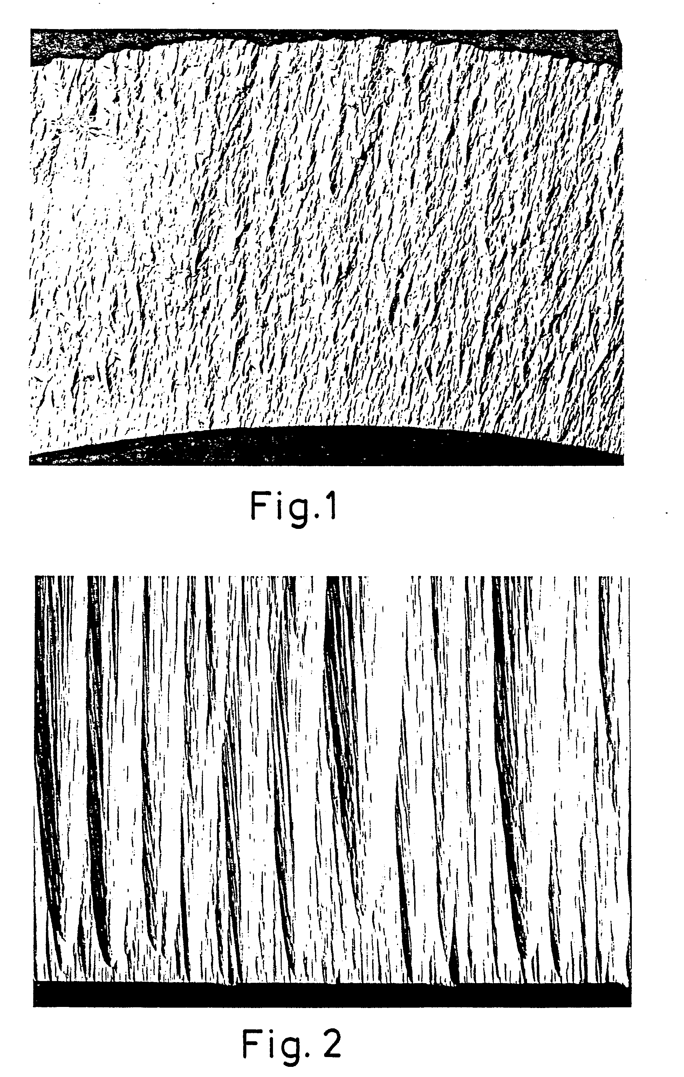

Die Fig. 1 und 2 geben ein anschauliches Bild von den zuvor geschilderten Zusammenhängen zwischen den Reaktionsbedingungen in der Gasphase und der Struktur des abgeschiedenen pyrolytischen Graphits.

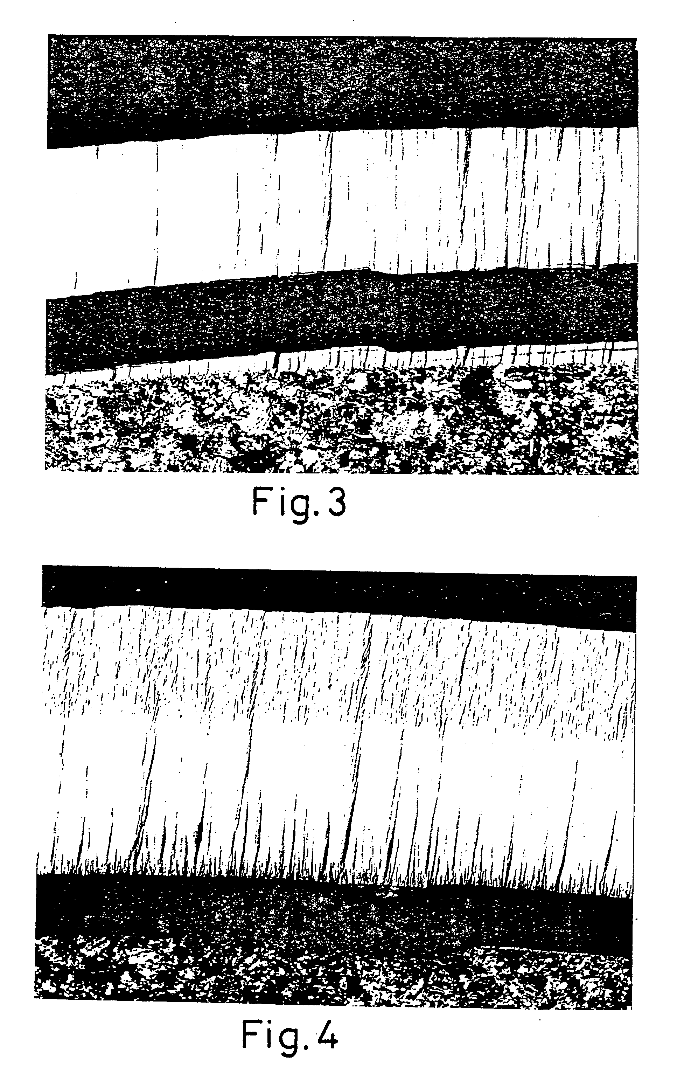

Fig. 3 zeigt einen typischen Fall von Delamination bei pyrolytischem Graphit mit Bündelstruktur.

Ein typisches Beispiel für zwei unterschiedlich strukturierte Schichtfolgen ist in Fig. 4 dargestellt. Derartige Mischstrukturen sind in solchen Fällen von Interesse, in denen man eine hinreichend hohe mechanische Festigkeit mit Bereichen besonders guter elektrischer und/oder thermischer Leitfähgkeit verbinden möchte.

## Beispiel 1

Ein Zylinder aus Elektrographit von 2 cm Durchmesser und 4,5 cm Höhe wurde in der Mitte einer Reaktorkammer angebracht und nach der Kaltwandmethode unter folgenden Bedingungen mit pyrolytischem Graphit beschichtet:

     Temperatur: 1900°C
     Gasdruck: 13,8 hPa
     Zeit: 60 min
     Gasart: Gemisch aus Propan und Acetylen etwa 10 : 1
Ergebnis: Schichtdicke: 372 $\mu$m
     Wachstumsgeschwindigkeit: 6,20 $\mu$m/min
     Struktur: Durchgehend mit Wachstumszentren durchsetzt (Fig. 1)

Keine Delamination

Zum Vergleich wurde ein gleicher Zylinder unter den gleichen Temperatur-, Druck-und Zeitbedingungen wie folgt beschichtet:
     Gasart: Propan
Ergebnis: Schichtdicke: 289 $\mu$m
     Wachstumsgeschwindigkeit: 4,82 $\mu$m/min
     Struktur: Bündelstruktur (Fig. 2)
     Delamination (Fig. 3)

## Beispiel 2

Es wurde eine Abscheidung an einem Gemisch von Propan und Äthylen im Verhältnis 2 : 1 unter folgenden Bedingungen vorgenommen, wobei das Verhältnis nach etwa 36 Minuten auf 10 : 1 umgestellt wurde.

     Temperatur: 1950°C
     Gasdruck: 20,0 hPa
     Zeit: 60 min
     Ergebnis: Schichtdicke: 400 $\mu$m
     Wachstumsgeschwindigkeit: 7,33 $\mu$m/min
     Struktur: Wechselnd Bündelstruktur und mit Wachstumszentren durchsetzte Struktur (Fig. 4)

Zum Vergleich wurde unter den gleichen Bedingungen eine Abscheidung nur aus Propan vorgenommen.
     Ergebnis: Schichtdicke 406 $\mu$m
     Wachstumsgeschwindikgeit: 6,77 $\mu$m/min
Struktur:      Ausgeprägte,      durchgehende Bündelstruktur (Fig. 1)

Insbesondere der Vergleich der beiden Ausführungsformen des Beispiels 2 ergibt den eindeutigen Hinweis, daß das Bildungsgeschehen der Wachstumszentren durch die Zumischung einer zweiten, thermodynamisch weniger stabilen Komponente zum Pyrolysegas maßgeblich bestimmt wird.

Eine spontane Rußbildung in der Gasphase trat unter sonst gleichen Bedingungen für Druck und Temperatur bei Propan als einziger Komponente erst bei einem Druck von 65 hPa auf, während bei reinem Äthylen der Grenzwert $p_{krit}$ für die Rußbildung bei 30 hPa lag, also deutlich oberhalb der in den Beispielen angegebenen Drücke.

Die Erfindung hat den Vorteil, daß sie es ermöglicht, die für bestimmte Anwendungen von pyrolytischem Graphit, besonders für frei-oder selbsttragende Objekte wie etwa Gitter für Elektronenröhren oder AAS-Cuvetten wünschenswerte, mechanisch relativ stabile Struktur des mit Wachstumszentren durchsetzten pyrolytischen Graphits zu realisieren. Diese Struktur ist geeignet, die Entstehung und Ausbreitung von Rissen infolge Delamination in den Objekten zu vermeiden. Die Erzeugung dieser Struktur erfolgt nach dem erfindungsgemäßen Verfahren in relativ einfacher Weise durch Zufuhr eines thermodynamisch relativ instabilen Gases (wie beispielsweise Acetylen) zum ursprünglichen Pyrolysegas (beispielsweise Propan). Zur Realisation bestimmter Strukturvarianten in gradueller Abstufung zwischen dem pyrolytischen Graphit mit Bündelstruktur und dem ausgeprägt mit Wachstumszentren durchsetzten pyrolytischem Graphit ist eine steuer-und regelbare Mischvorrichtung für die gasförmigen Komponenten des zu pyrolysierenden Kohlenwasserstoffgemisches zweckmäßig.

**Ansprüche**

1. Verfahren zur Herstellung von pyrolytischem Graphit durch reaktive Abscheidung aus einer Gasphase, die gesättigte und ungesättigte Kohlenwasserstoffe enthält, dadurch gekennzeichnet, daß die Abscheidung mit Abscheidungsraten von 1 bis 10μm/min durchgeführt wird, daß die Gasphase aus mindestens einem gesättigten Kohlenwasserstoff mit 1 bis 4 Kohlenstoffatomen besteht, dem 1 bis 10 Vol.% mindestens eines ungesättigten Kohlenwasserstoffs zugesetzt worden sind, und daß im gesamten Verfahrensablauf der kritische Grenzdruck, bei dem eine Rußbildung einsetzt, nicht überschritten wird.

2. Verfahren nach Anspruch 1, dadurch gekennzeichnet, daß die Gasphase als gesättigten Kohlenwasserstoff Methan, Äthan und/oder Propan und als ungesättigten Kohlenwasserstoff Äthylen, Acetylen, Benzol, Toluol und/oder Xylol enthält.

3. Verfahren nach Anspruch 1 oder 2, dadurch gekennzeichnet, daß der Anteil an ungesättigtem Kohlenwasserstoff in der Gasphase während der Abscheidung einmal oder mehrmals für 0,5 bis 50 min auf 10 bis 50 Vol.% erhöht wird.

4. Verfahren nach Anspruch 1, 2 oder 3, dadurch gekennzeichnet, daß die Zusammensetzung der Gasphase exakt geregelt wird.

Fig.1

Fig. 2

1-$\text{II}$-PHD 86-138

Fig.3

Fig.4